(19) Europäisches Patentamt
European Patent Office
Office européen des brevets

(11) EP 4 098 706 A1

# (12) EUROPEAN PATENT APPLICATION

(43) Date of publication:
**07.12.2022 Bulletin 2022/49**

(21) Application number: **22175000.3**

(22) Date of filing: **24.05.2022**

(51) International Patent Classification (IPC):
***C09D 11/102*** (2014.01) ***C09D 11/107*** (2014.01)
***C09D 11/322*** (2014.01) ***C09D 11/38*** (2014.01)
***C09D 11/40*** (2014.01) ***C09D 11/54*** (2014.01)

(52) Cooperative Patent Classification (CPC):
**C09D 11/54; C09D 11/102; C09D 11/107; C09D 11/322; C09D 11/38; C09D 11/40**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.06.2021 JP 2021093968**

(71) Applicant: **Ricoh Company, Ltd.**
**Tokyo 143-8555 (JP)**

(72) Inventors:
- **Terai, Nozomi**
  **Japan, 143-8555 (JP)**
- **Koizuka, Yuusuke**
  **Tokyo, 143-8555 (JP)**
- **Shimura, Naoto**
  **Tokyo, 143-8555 (JP)**
- **Takarada, Tatsuya**
  **Tokyo, 143-8555 (JP)**

(74) Representative: **Marks & Clerk LLP**
**15 Fetter Lane**
**London EC4A 1BW (GB)**

## (54) SET OF PROCESSING FLUID AND INK, AND METHOD AND APPARATUS FOR PRODUCING PRINTED MATTER

(57) A set of a processing fluid and an ink is provided where the ink contains a coloring material, an organic solvent, and a resin $R^i$ and the processing fluid contains a polyvalent metal salt, a resin $R^t$, and a silicone-based surfactant. A maximum tensile stress of an ink film obtained by drying the ink is 2 $N/mm^2$ or greater.

FIG. 3

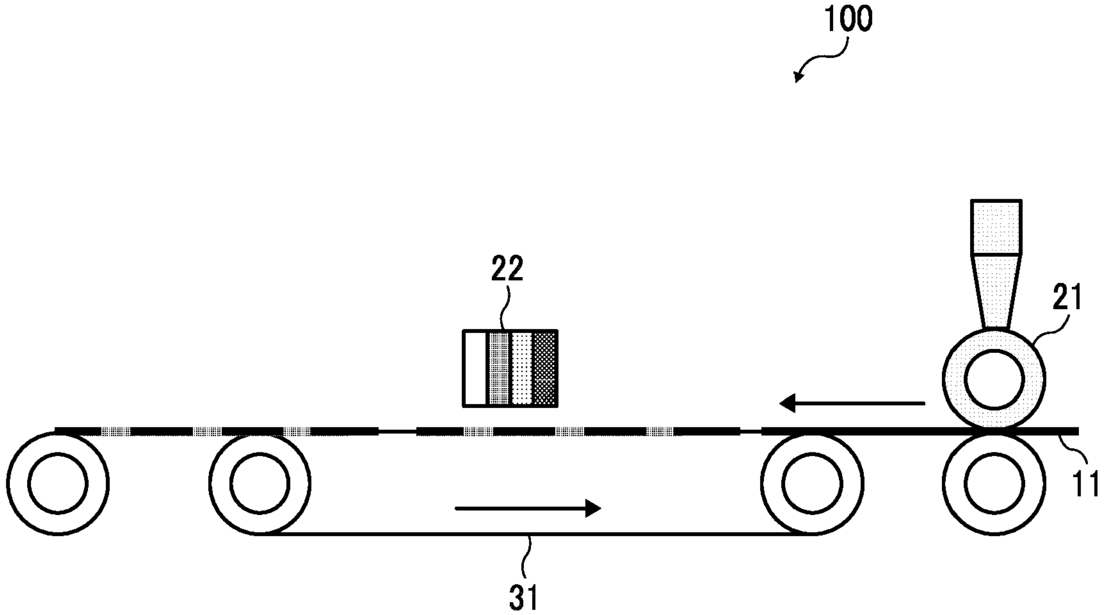


EP 4 098 706 A1

## Description

BACKGROUND

Technical Field

The present disclosure relates to a set of a processing fluid and an ink and to a method for producing a printed matter and an apparatus for producing a printed matter.

Description of the Related Art

In recent years, inkjet printers have been used not only for home use but also for industrial applications, such as for cloth, plastic films, wallpaper, and window films.

In inkjet printing for industrial applications, various kinds of printing bases are used when printed matters are produced. The printing bases have different surface properties, which may influence qualities of the printed matters.

Under such circumstances, in order to produce printed matters of equivalent quality on various bases, it is known to apply a processing fluid for increasing ink-receiving properties before application of an ink.

For example, proposed is a processing fluid containing a flocculant and dispersoids of core-shell resin particles formed of a predetermined resin, in order to increase, for example, storage stability of the processing fluid, image forming ability of an ink, and adhesiveness to a base (see, for example, JP-2019-104136-A).

SUMMARY

The present disclosure has an object to provide a set of a processing fluid and an ink, where the set provides excellent fixability of an image and can form an image with low degrees of image bleeding and cracking.

According to one aspect of the present disclosure, a set of a processing fluid and an ink in provided where the ink contains a coloring material, an organic solvent, and a resin $R^i$ and the processing fluid contains a polyvalent metal salt, a resin $R^t$, and a silicone-based surfactant. A maximum tensile stress of an ink film obtained by drying the ink is 2 $N/mm^2$ or greater.

According to one aspect of the present disclosure, a method for producing a printed matter is provided. The method includes: applying a processing fluid to a base; and applying an ink, where the processing fluid and the ink are the above-described processing fluid and ink.

According to one aspect of the present disclosure, an apparatus for producing a printed matter is provided. The apparatus includes: the above-described processing fluid and ink; a processing fluid applying unit configured to apply the processing fluid to a base; and an ink applying unit configured to apply the ink.

The present disclosure can provide a set of a processing fluid and an ink, where the set provides excellent fixability of an image and can form an image with low degrees of image bleeding and cracking.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a perspective view of an apparatus for producing a printed matter according to an embodiment of the present invention;

FIG. 2 is a perspective view of a main tank of the apparatus for producing a printed matter according to an embodiment of the present invention; and

FIG. 3 is schematic diagram illustrating an apparatus for producing a printed matter according to an embodiment of the present invention.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended

to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

(Set of Processing Fluid and Ink)

A set of the present disclosure of a processing fluid and an ink includes the ink containing a coloring material, an organic solvent, and a resin $R^i$ and the processing fluid containing a polyvalent metal salt, a resin $R^t$, and a silicone-based surfactant. If necessary, the set of the present disclosure further includes other materials.

In the set of the present disclosure of the processing fluid and the ink, a maximum tensile stress of an ink film obtained by drying the ink is 2 $N/mm^2$ or greater.

The maximum tensile stress of the ink film is measured in the following manner. First, the ink (8 g) is placed in a TEFLON (registered trademark) Petri dish 50 mm in diameter and dried in a hot air circulatory thermostatic bath of 70 degrees Celsius for two days, to obtain the ink film. The obtained ink film is cut with a cutter so as to have a size of 5 mm×50 mm. The cut film is subjected to a tensile test under the following measurement conditions, to measure the maximum tensile stress. The average thickness of the ink film is obtained by measuring the thickness at three or more points with a micrometer, followed by averaging. The average thickness of the ink film is adjusted to be from 0.3 mm through 0.8 mm.

[Measurement Conditions of Tensile Stress]

Device: AUTOGRAPH AG-10N, obtained from Shimadzu Corporation
Load cell: 50 N
Tension speed: 150 mm/min
Interchuck distance: 4 mm
Sample width: 5 mm

In related art, when an ink coating film is formed by jetting droplets of an aqueous inkjet ink using an inkjet printing apparatus, insufficient fixability and bleeding occurs on non-permeating substrates.

Also, in related art, when a processing fluid is used as a pre-step of the formation of an ink coating film by jetting droplets of an aqueous inkjet ink using an inkjet printing apparatus, cohesion of a pigment in the ink and a resin occurs by a cohesive force of the processing fluid, causing cracking in the ink film.

As a result of intensive studies, the inventors of the present invention have found that by controlling the maximum tensile stress of an ink film to 2 $N/mm^2$ or greater, it is possible to increase the strength of an ink film formed on a base, especially a non-absorbing base. Moreover, the inventors of the present invention have found that by controlling the maximum tensile stress of an ink film to 2 $N/mm^2$ or greater, an ink film (an image) formed on a processing fluid having a strong cohesive force is excellent in fixability (adhesiveness) of the ink film and can be prevented from cracking.

The maximum tensile stress of an ink film formed of the above ink is 2 $N/mm^2$ or greater, preferably 2 $N/mm^2$ or greater but 20 $N/mm^2$ or less, more preferably 5 $N/mm^2$ or greater but 15 $N/mm^2$ or less, and further preferably 8 $N/mm^2$ or greater but 13 $N/mm^2$ or less. When the maximum tensile stress of the ink film is 2 $N/mm^2$ or greater, it is possible to obtain a printed matter while preventing cracking of the ink film (image) formed.

<Ink>

The ink contains a coloring material, an organic solvent, and a resin $R^i$ and if necessary, further contains other components.

«Coloring Material»

The coloring material is not particularly limited and may be appropriately selected depending on the intended purpose. For example, pigments and dyes can be used.

The pigment usable is an inorganic pigment or an organic pigment. These may be used alone or in combination. In addition, it is possible to use a mixed crystal as the pigment.

Examples of the pigment usable include, but are not limited to, black pigments, yellow pigments, magenta pigments, cyan pigments, white pigments, green pigments, orange pigments, gloss pigments of gold, silver, etc., and metallic pigments.

As the inorganic pigment, in addition to titanium oxide, iron oxide, calcium carbonate, barium sulfate, aluminum hydroxide, barium yellow, cadmium red, and chrome yellow, carbon black manufactured by known methods such as contact methods, furnace methods, and thermal methods can be used.

As the organic pigment, azo pigments, polycyclic pigments (e.g., phthalocyanine pigments, perylene pigments, perinone pigments, anthraquinone pigments, quinacridone pigments, dioxazine pigments, indigo pigments, thioindigo pigments, isoindolinone pigments, and quinophthalone pigments), dye chelates (e.g., basic dye type chelates and acid dye type chelates), nitro pigments, nitroso pigments, and aniline black can be used.

Of these pigments, pigments having good affinity with solvents are preferable. Also, hollow resin particles and inorganic hollow particles can be used.

Specific examples of the pigments for black include, but are not limited to, carbon black (C.I. Pigment Black 7) such as furnace black, lamp black, acetylene black, and channel black, metals such as copper, iron (C.I. Pigment Black 11), and titanium oxide, and organic pigments such as aniline black (C.I. Pigment Black 1).

Specific examples of the pigments for color include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51; C.I. Pigment Red 1, 2, 3, 5, 17, 22, 23, 31, 38, 48:2 {Permanent Red 2B(Ca)}, 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rohdamine Lake), 3, 5:1, 16, 19, 23, and 38; C.I. Pigment Blue 1, 2, 15 (Phthalocyanine Blue), 15:1, 15:2, 15:3, 15:4, (Phthalocyanine Blue), 16, 17:1, 56, 60, and 63; C.I. Pigment Green 1, 4, 7, 8, 10, 17, 18, and 36.

The type of dye is not particularly limited and includes, for example, acidic dyes, direct dyes, reactive dyes, basic dyes. These can be used alone or in combination.

Specific examples of the dye include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C.I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

The content of the coloring material in the ink is preferably 0.1% by mass or more but 15% by mass or less and more preferably 1% by mass or more but 10% by mass or less in terms of improving mage density and of good fixability and discharge stability.

A method for dispersing the pigment in the ink is, for example, a method of preparing a self-dispersible pigment by introducing a hydrophilic functional group into the pigment, a method of coating the surface of the pigment with a resin, and a method of dispersing the pigment using a dispersant.

As the method of preparing a self-dispersible pigment by introducing a hydrophilic functional group into a pigment, for example, it is possible to add a functional group such as a sulfone group and a carboxyl group to the pigment (e.g., carbon) to make the pigment dispersible in water.

As the method of coating the surface of the pigment with a resin, the pigment can be encapsulated by microcapsules to make the pigment dispersible in water. This can be referred to as a resin-coated pigment. In this case, the pigment to be added to the ink is not necessarily coated with the resin. Pigments partially or wholly uncovered with the resin may be dispersed in the ink unless the pigments have an adverse impact to the effects of the present disclosure. Of these, a resin-coated pigment is preferable in terms of fixability, storage stability, and discharge reliability of the ink.

As the method of dispersing the pigment using a dispersant, for example, a known dispersant of a small molecular weight type or a high molecular weight type represented by a surfactant is used to disperse the pigments.

As the dispersant, it is possible to use, for example, anionic surfactants, cationic surfactants, amphoteric surfactants, nonionic surfactants, etc. depending on the pigments.

Also, RT-100, manufactured by TAKEMOTO OIL & FAT CO., LTD. (a nonionic surfactant) and a formalin condensate of naphthalene sodium sulfonate are suitable as dispersants. These dispersants can be used alone or in combination.

-Pigment Dispersion-

The ink can be obtained by mixing a pigment with materials such as water and organic solvent. It is also possible to mix a pigment with water, a dispersant, etc., first to prepare a pigment dispersion and thereafter mix the pigment dispersion with materials such as water and organic solvent to manufacture ink.

The pigment dispersion is obtained by mixing and dispersing water, pigment, pigment dispersant, and other

optional components and adjusting the particle size. It is good to use a dispersing device for dispersion.

The particle diameter of the pigment in the pigment dispersion has no particular limit. For example, the maximum frequency in the maximum number conversion is preferably 20 nm or more but 500 nm or less and more preferably 20 nm or more but 150 nm or less to improve dispersion stability of the pigment and ameliorate the discharging stability and image quality such as image density. The particle diameter of the pigment can be measured using a particle size distribution analyzer (NANOTRAC Wave-UT151, manufactured by MicrotracBEL Corp).

The content of the pigment in the pigment dispersion is not particularly limited and can be suitably selected to suit a particular application. In terms of improving discharging stability and image density, the content is preferably 0.1% by mass or more but 50% by mass or less and more preferably 0.1% by mass or more but 30% by mass or less.

During the production of the pigment dispersion, coarse particles are optionally filtered off with a filter, a centrifuge, etc. preferably followed by degassing.

[Preparation of Pigment Dispersion Liquid]

A method for dispersing the pigment to obtain the ink is, for example, a method of preparing a self-dispersible pigment by introducing a hydrophilic functional group into the pigment, a method of coating the surface of the pigment with a resin (a resin-coated pigment), and a method of dispersing the pigment using a dispersant.

-Self-dispersible Pigment-

As the method of preparing a self-dispersible pigment by introducing a hydrophilic functional group into a pigment, for example, it is possible to add a functional group such as a sulfone group and a carboxyl group to the pigment (e.g., carbon) to make the pigment dispersible in water.

-Resin-coated Pigment-

As the method of coating the surface of the pigment with a resin, the pigment can be encapsulated by microcapsules to make the pigment dispersible in water. This can be referred to as a resin-coated pigment. In this case, the pigment to be added to the ink is not necessarily coated with the resin. Pigments partially or wholly uncovered with the resin may be dispersed in the ink unless the pigments have an adverse impact to the effects of the present disclosure.

«Organic Solvent»

There is no specific limitation on the type of the organic solvent used in the present disclosure. For example, water-soluble organic solvents are suitable. Specific examples thereof include, but are not limited to, polyols, ethers such as polyol alkylethers and polyol arylethers, nitrogen-containing heterocyclic compounds, amides, amines, and sulfur-containing compounds.

Specific examples of the water-soluble organic solvents include, but are not limited to, polyols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol; polyol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether; polyol arylethers such as ethylene glycol monophenylether and ethylene glycol monobenzylether; nitrogen-containing heterocyclic compounds such as 2-pyrolidone, N-methyl-2-pyrolidone, N-hydroxyethyl-2-pyrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propioneamide, and 3-buthoxy-N,N-dimethyl propioneamide; amines such as monoethanolamine, diethanolamine, and triethylamine; sulfur-containing compounds such as dimethyl sulfoxide, sulfolane, and thiodiethanol; propylene carbonate, and ethylene carbonate. These may be used alone or in combination.

Since the water-soluble organic solvent serves as a humectant and also imparts a good drying property, it is preferable to use an organic solvent having a boiling point of 250 degrees Celsius or lower.

Polyol compounds having eight or more carbon atoms and glycol ether compounds are also suitable. Specific examples of the polyol compounds having eight or more carbon atoms include, but are not limited to, 2-ethyl-1,3-hexanediol and 2,2,4-trimethyl-1,3-pentanediol.

Specific examples of the glycolether compounds include, but are not limited to, polyol alkylethers such as ethyleneglycol monoethylether, ethyleneglycol monobutylether, diethylene glycol monomethylether, diethyleneglycol

monoethylether, diethyleneglycol monobutylether, tetraethyleneglycol monomethylether, propyleneglycol monoethylether; and polyol arylethers such as ethyleneglycol monophenylether and ethyleneglycol monobenzylether.

The content of the organic solvent in ink has no particular limit and can be suitably selected to suit a particular application. In terms of the drying property and discharging reliability of the ink, the content is preferably 10% by mass or more but 60% by mass or less and more preferably 20% by mass or more but 60% by mass or less.

«Resin $R^i$>>

The resin $R^i$ has no particular limit. Specific examples thereof include, but are not limited to, polyester resins, urethane resins, acrylic resins, vinyl acetate-based resins, styrene-based resins, butadiene-based resins, styrene-butadiene-based resins, vinylchloride-based resins, acrylic styrene-based resins, and acrylic silicone-based resins. Of these, urethane resins and acrylic resins are preferable in terms of adhesiveness to a base.

As the resin $R^i$, resin particles of such resins may be used. It is possible to mix a resin emulsion in which the resin particles are dispersed in water serving as a dispersion medium with materials such as a coloring material and an organic solvent to obtain ink. The resin particle can be synthesized or is available on the market. It is possible to synthesize the resin particle or obtain from market. These can be used alone or in combination of the resin particles.

The volume average particle diameter of the resin particle is not particularly limited and can be suitably selected to suit to a particular application. The volume average particle diameter is preferably 10 nm or more but 1,000 nm or less, more preferably 10 nm or more but 200 nm or less, and furthermore preferably 10 nm or more but 100 nm or less to obtain good fixability and image hardness.

The volume average particle diameter can be measured by using a particle size distribution analyzer (NANOTRAC Wave-UT151, manufactured by MicrotracBEL Corp.).

The glass transition temperature (Tg) of the resin $R^i$ is preferably 120 degrees Celsius or lower and more preferably lower than 100 degrees Celsius. When the glass transition temperature (Tg) of the resin $R^i$ is 120 degrees Celsius or lower, it is possible to achieve both satisfactory film formability and satisfactory fixability to a base.

The proportion of the resin $R^i$ in the ink is preferably 5% by mass or more but less than 15% by mass, and more preferably 8% by mass or more but 12% by mass or less. When the proportion of the resin $R^i$ is 5% by mass or more but less than 15% by mass, it is possible to ensure image fixability.

The particle diameter of solids in the ink has no particular limit. For example, the maximum frequency in the maximum number conversion is preferably 20 nm or more but 1,000 nm or less and more preferably 20 nm or more but 150 nm or less to ameliorate the discharging stability and image quality such as image density. The solids include, for example, resin particles and pigment particles. The particle diameter can be measured using a particle size distribution analyzer (NANOTRAC Wave-UT151, manufactured by MicrotracBEL Corp).

«Other Components»

The other components are not particularly limited and may be appropriately selected depending on the intended purpose. Examples of the other components include, but are not limited to, water, a surfactant, a defoaming agent, preservatives and fungicides, and a corrosion inhibitor.

-Water-

The content of water in the ink has no particular limit. In terms of the drying property and discharging reliability of the ink, the content is preferably 10% by mass or more but 90% by mass or less and more preferably 20% by mass or more but 60% by mass.

-Surfactant-

Examples of the surfactant are silicone-based surfactants, fluorosurfactants, amphoteric surfactants, nonionic surfactants, anionic surfactants, etc.

The silicone-based surfactant has no specific limit and can be suitably selected to suit to a particular application. Of these, preferred are silicone-based surfactants which are not decomposed even in a high pH environment. Specific examples thereof include, but are not limited to, side-chain-modified polydimethylsiloxane, both end-modified polydimethylsiloxane, one-end-modified polydimethylsiloxane, and side-chain-both-end-modified polydimethylsiloxane. A silicone-based surfactant having a polyoxyethylene group or a polyoxyethylene polyoxypropylene group is particularly preferable because such an agent demonstrates good characteristics as an aqueous surfactant. It is possible to use a polyether-modified silicone-based surfactant as the silicone-based surfactant. A specific example thereof is a compound in which a polyalkylene oxide structure is introduced into the side chain of the Si site of dimethyl siloxane.

Specific examples of the fluorosurfactants include, but are not limited to, perfluoroalkyl sulfonic acid compounds, perfluoroalkyl carboxylic acid compounds, perfluoroalkyl phosphoric acid ester compounds, adducts of perfluoroalkyl ethylene oxide, and polyoxyalkylene ether polymer compounds having a perfluoroalkyl ether group in its side chain. These are particularly preferable because they do not foam easily. Specific examples of the perfluoroalkyl sulfonic acid compounds include, but are not limited to, perfluoroalkyl sulfonic acid and salts of perfluoroalkyl sulfonic acid. Specific examples of the perfluoroalkyl carboxylic acid compounds include, but are not limited to, perfluoroalkyl carboxylic acid and salts of perfluoroalkyl carboxylic acid. Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain and salts of polyoxyalkylene ether polymers having a perfluoroalkyl ether group in its side chain. Counter ions of salts in these fluorosurfactants are, for example, Li, Na, K, $NH_4$, $NH_3CH_2CH_2OH$, $NH_2(CH_2CH_2OH)_2$, and $NH(CH_2CH_2OH)_3$.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides, etc.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

The silicone-based surfactant has no particular limit. Specific examples thereof include, but are not limited to, side-chain-modified polydimethyl siloxane, both end-modified polydimethylsiloxane, one-end-modified polydimethylsiloxane, and side-chain-both-end-modified polydimethylsiloxane. In particular, a polyether-modified silicone-based surfactant having a polyoxyethylene group or a polyoxyethylene polyoxypropylene group is particularly preferable because such a surfactant demonstrates good characteristics as an aqueous surfactant.

Any suitably synthesized surfactant and any product thereof available on the market is suitable. Products available on the market are obtained from BYK Chemie K.K., Shin-Etsu Silicone Co., Ltd., Dow Corning Toray Co., Ltd., etc., NIHON EMULSION Co., Ltd., Kyoeisha Chemical Co., Ltd., etc.

The polyether-modified silicon-containing surfactant has no particular limit. For example, a compound in which the polyalkylene oxide structure represented by the following Chemical structure S-1 is introduced into the side chain of the Si site of dimethyl polysiloxane.

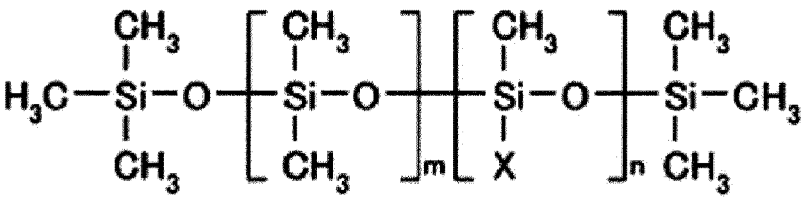

$$X = -R(C_2H_4O)_a\ (C_3H_6O)_b\ R'$$

Chemical structure S-1

In the Chemical structure S-1, "m", "n", "a", and "b" each, respectively represent integers, R represents an alkylene group, and R' represents an alkyl group.

Specific examples of polyether-modified silicone-based surfactants include, but are not limited to, KF-618, KF-642, and KF-643 (all manufactured by Shin-Etsu Chemical Co., Ltd.), EMALEX-SS-5602 and SS-1906EX (both manufactured by NIHON EMULSION Co., Ltd.), FZ-2105, FZ-2118, FZ-2154, FZ-2161, FZ-2162, FZ-2163, and FZ-2164 (all manufactured by Dow Corning Toray Co.,Ltd.), BYK-33 and BYK-387 (both manufactured by BYK Chemie K.K.), and TSF4440, TSF4452, and TSF4453 (all manufactured by Momentive Performance Materials Inc.).

A fluorosurfactant in which the number of carbon atoms replaced with fluorine atoms is from 2 to 16 is preferable and, 4 to 16, more preferable.

Specific examples of the fluorosurfactants include, but are not limited to, perfluoroalkyl phosphoric acid ester compounds, adducts of perfluoroalkyl ethylene oxide, and polyoxyalkylene ether polymer compounds having a perfluoroalkyl ether group in its side chain. Of these, polyoxyalkylene ether polymer compounds having a perfluoroalkyl ether

group in its side chain are preferable because they do not foam easily and the fluorosurfactant represented by the following Chemical formula F-1 or Chemical formula F-2 is more preferable.

$CF_3CF_2(CF_2CF_2)_m$ $-CH_2CH_2O(CH_2CH_2O)_n$ H Chemical formula F-1

In the Chemical formula F-1, in order to have water solubility, "m" is preferably 0 or an integer of from 1 to 10 and "n" is preferably 0 or an integer of from 1 to 40.

Chemical formula F-2 $C_nF_{2n+1}-CH_2CH(OH)CH_2-O-(CH_2CH_2O)_a-Y$

In the Chemical formula F-2, Y represents H, $C_mF_{2m+1}$, where m represents an integer of from 1 to 6, $H_2CH(OH)CH_2-C_mF_{2m+1}$, where m represents an integer of from 4 to 6, or $C_pH_{2p+1}$, where p represents an integer of from 1 to 19. "n" represents an integer of from 1 to 6. "a" represents an integer of from 4 to 14.

Products available on the market may be used as the fluorosurfactant. Specific examples of the products available on the market include, but are not limited to, SURFLON S-111, SURFLON S-112, SURFLON S-121, SURFLON S-131, SURFLON S-132, SURFLON S-141, and SURFLON S-145 (all manufactured by ASAHI GLASS CO., LTD.); FLUORAD FC-93, FC-95, FC-98, FC-129, FC-135, FC-170C, FC-430, and FC-431 (all manufactured by SUMITOMO 3M); MEGAFACE F-470, F-1405, and F-474 (all manufactured by DIC CORPORATION); ZONYL™ TBS, FSP, FSA, FSN-100, FSN, FSO-100, FSO, FS-300, UR, CAPSTONE® FS-30, FS-31, FS-3100, FS-34, FS-35 (all manufactured by The Chemours Company); FT-110, FT-250, FT-251, FT-400S, FT-150, and FT-400SW (all manufactured by NEOS COMPANY LIMITED); POLYFOX PF-136A, PF-156A, PF-151N, PF-154, PF-159 (manufactured by OMNOVA SOLUTIONS INC.), and UNIDYNE DSN-403N (manufactured by DAIKIN INDUSTRIES). Of these, FT-110, FT-250, FT-251, FT-400S, FT-150, and FT-400SW (all manufactured by The Chemours Company), PolyFox PF-151N (manufactured by OMNOVA SOLUTIONS INC.), and UNIDYNE DSN-403N (manufactured by DAIKIN INDUSTRIES) are particularly preferable in terms of good printing quality, coloring in particular, and improvement on permeation, wettability, and uniform dying property to paper.

The content of the surfactant in ink is not particularly limited. It is preferably 0.001% by mass or more but 5% by mass or less and more preferably 0.05% by mass or more but 5% by mass or less in terms of excellent wettability and discharging stability and improvement on image quality.

-Defoaming Agent-

The defoaming agent has no particular limit. For example, silicon-based defoaming agents, polyether-based defoaming agents, and aliphatic acid ester-based defoaming agents are suitable. These can be used alone or in combination. Of these, silicone-based defoaming agents are preferable to easily break foams.

-Preservatives and Fungicides-

The preservatives and fungicides are not particularly limited. A specific example is 1,2-benzisothiazolin-3-one.

-Corrosion Inhibitor-

The corrosion inhibitor has not particular limit. Examples thereof include, but are not limited to, acid sulfite and sodium thiosulfate.

-pH regulator-

The pH regulator has no particular limit. It is preferable to adjust the pH to 7 or higher. Specific examples thereof include, but are not limited to, amines such as diethanol amine and triethanol amine.

The property of the ink is not particularly limited. For example, viscosity, surface tension, pH, etc., are preferably in the following ranges.

The viscosity at 25°C of the ink is preferably 5 mPa·s or higher but 30 mPa·s or lower and more preferably 5 mPa·s or higher but 25 mPa·s or lower to improve print density and print quality and provides favorable dischargeability. The viscosity of each ink can be measured by a rotatory viscometer (RE-80L, obtained by TOKI SANGYO CO., LTD.). The measuring conditions can be as follows:

Standard cone rotor (1°34' x R24)
Sample liquid amount: 1.2 mL

Number of rotations: 50 rpm
25 degrees Celsius
Measuring time: three minutes

The surface tension of the ink is preferably 35 mN/m or less and more preferably 32 mN/m or less at 25 degrees Celsius in terms that the ink is suitably levelized on a print medium and the drying time of the ink is shortened.
The pH of the ink is preferably from 7 to 12 and more preferably from 8 to 11 in terms of prevention of corrosion of metal materials contacting the ink.

<Processing Fluid>

The processing fluid contains a polyvalent metal salt, a resin $R^t$, and a silicone-based surfactant and if necessary, further contains other components.

«Polyvalent Metal Salt»

The polyvalent metal salt serves as a flocculant. The polyvalent metal salt flocculates the components (coloring materials) in the ink to prevent, for example, image bleeding. This makes it possible to form an image having a high image quality.
The polyvalent metal salt is not particularly limited and may be appropriately selected depending on the intended purpose. Examples of the polyvalent metal salt include, but are not limited to, titanium salts, chromium salts, copper salts, cobalt salts, strontium salts, barium salts, iron salts, aluminum salts, calcium salts, potassium salts, sodium salts, nickel salts, and magnesium salts. Of these, calcium salts and magnesium salts are preferable and magnesium salts are more preferable. Use of calcium salts and magnesium salts as the polyvalent metal salt can improve a cohesive force of the coloring materials (prevention of image bleeding).
The proportion of the polyvalent metal salt in the processing fluid is preferably 2% by mass or less, and more preferably 5% by mass or less. When the proportion of the polyvalent metal salt in the processing fluid is 2% by mass or less, it is possible to prevent occurrence of cracking due to excessive cohesion of the ink components on the image and occurrence of image bleeding.

«Resin $R^t$>>

The resin $R^t$ has no particular limit. Specific examples thereof include, but are not limited to, urethane resins, polyester resins, acrylic resins, vinyl acetate-based resins, styrene-based resins, butadiene-based resins, styrene-butadiene-based resins, vinylchloride-based resins, acrylic styrene-based resins, and acrylic silicone-based resins.
As the resin $R^t$, resin particles of such resins may be used. It is possible to mix a resin emulsion in which the resin particles are dispersed in water serving as a dispersion medium with materials such as a coloring material and an organic solvent to obtain a processing fluid. The resin particle can be synthesized or is available on the market. It is possible to synthesize the resin particle or obtain from market. These can be used alone or in combination of the resin particles.
The proportion (solid concentration) of the $R^t$ in the processing fluid is preferably 5% by mass or more but 15% by mass or less, and more preferably 8% by mass or more but 10% by mass or less. When the proportion of the resin $R^t$ is 5% by mass or more but 15% by mass or less, image fixability can be improved.

<<Silicone-based Surfactant>>

The silicone-based surfactant has no specific limit and can be suitably selected to suit to a particular application. Specific examples thereof include, but are not limited to, side-chain-modified polydimethylsiloxane, both end-modified polydimethylsiloxane, one-end-modified polydimethylsiloxane, and side-chain-both-end-modified polydimethylsiloxane. A silicone-based surfactant having a polyoxyethylene group or a polyoxyethylene polyoxypropylene group as a modifying group is particularly preferable because such an agent demonstrates good characteristics as an aqueous surfactant. It is possible to use a polyether-modified silicone-based surfactant as the silicone-based surfactant. A specific example thereof is a compound in which a polyalkylene oxide structure is introduced into the side chain of the Si site of dimethyl siloxane. These may be used alone or in combination.
The content of the silicone-based surfactant is not particularly limited and may be appropriately selected depending on the intended purpose. It is preferably 0.001% by mass or more but 5% by mass or less and more preferably 0.05% by mass or more but 5% by mass or less in terms of excellent wettability and improvement on image quality.

«Other Components»

The other components are not particularly limited and may be appropriately selected depending on the intended purpose. The processing fluid contains an organic solvent and water and if necessary, may contain a defoaming agent, a pH regulator, preservatives and fungicides, and a corrosion inhibitor.
The organic solvent, the defoaming agent, the pH regulator, the preservatives and fungicides, and the corrosion inhibitor may be similar materials to those used in the ink. Besides, materials used in known processing fluids can be used.

«Defoaming Agent»

The defoaming agent has no particular limit. For example, silicon-based defoaming agents, polyether-based defoaming agents, and aliphatic acid ester-based defoaming agents are suitable. These can be used alone or in combination. Of these, silicone-based defoaming agents are preferable to easily break foams.

«Preservatives and Fungicides»

The preservatives and fungicides are not particularly limited. A specific example is 1,2-benzisothiazolin-3-one.

«Corrosion Inhibitor»

The corrosion inhibitor has not particular limit. Examples thereof include, but are not limited to, acid sulfite and sodium thiosulfate.
In the set of the present disclosure of the processing fluid and the ink, the glass transition temperature ($Tg^t$) of the resin $R^t$ and the glass transition temperature ($Tg^i$) of the resin $R^i$ preferably satisfy $Tg^t<Tg^i$. When the glass transition temperature ($Tg^t$) of the resin $R^t$ and the glass transition temperature ($Tg^i$) of the resin $R^i$ satisfy $Tg^t<Tg^i$, it is possible to improve fixability of a pre-coat liquid to a base and scratch resistance of an ink film.
The glass transition temperature ($Tg^t$) of the resin $R^t$ and the glass transition temperature ($Tg^i$) of the resin $R^i$ can be measured by the following method.
The glass transition temperature Tg is measured by "filming temperature tester" (obtained from Imoto Machinery Co., LTD.). When two or more resins are contained, the contents of the respective resins in the processing fluid and the ink are taken into consideration to calculate the glass transition temperature ($Tg^t$) of the resin $R^t$ and the glass transition temperature ($Tg^i$) of the resin $R^i$ according to Formula (1) below. The calculated glass transition temperatures are referred to as $Tg^t$ and $Tg^i$.

Formula (1): $Tg^t$ or $Tg^i$ = (Tg of resin 1)×(the content of resin 1)/the total resin content+(Tg of resin 2)×(the content of resin 2)/the total resin content+(Tg of resin 3)×(the content of resin 3)/the total resin content+ ...

In the set of the present disclosure of the processing fluid and the ink, the static surface tension $\gamma^t$ of the processing fluid and the static surface tension $\gamma^i$ of the ink preferably satisfy $\gamma^t>\gamma^i$. When the static surface tension $\gamma^t$ of the processing fluid and the static surface tension $\gamma^i$ of the ink satisfy $\gamma^t>\gamma^i$, it is possible to improve image quality.
The static surface tension $\gamma^t$ of the processing fluid and the static surface tension $\gamma^i$ of the ink can be measured as 25 degrees Celsius with automated surface tension meter DY-300 (obtained from Kyowa Interface Science Co., Ltd.).
The set of the present disclosure of the processing fluid and the ink provides excellent fixability of an image and can form an image with low degrees of image bleeding and cracking. In particular, also when the base is a non-permeating substrate, the set of the present disclosure provides excellent fixability and can form an image with low degrees of image bleeding and cracking. Thus, the set of the present disclosure is suitable especially for a non-permeating substrate.
The non-permeating substrate has a surface with low moisture permeability and absorbency and includes a material having myriad of hollow spaces inside but not open to the outside. To be more quantitative, the substrate has a water-absorption amount of 10 $mL/m^2$ or less between the contact and 30 $msec^{1/2}$ after the contact according to Bristow method.
Examples of the non-permeating substrate include, but are not limited to, plastic films of polyvinyl chloride resin, polyethylene terephthalate (PET), polypropylene, polyethylene, and polycarbonate. It is also suitable to use building materials (e.g., wall paper, floor materials, and tiles), cloth (e.g., cloth for apparel such as T-shirts), textile, and leather,

as the non-permeating substrate. In addition, the configuration of the paths through which the print medium is transferred can be adjusted to use ceramics, glass, metal, etc.

(Method and Apparatus for Producing Printed Matter)

A method of the present disclosure for producing a printed matter includes a processing fluid applying step of applying a processing fluid to a base and an ink applying step of applying an ink. If necessary, the method of the present disclosure further includes other steps.

An apparatus of the present disclosure for producing a printed matter includes a processing fluid applying unit configured to apply a processing fluid to a base and an ink applying unit configured to apply an ink. If necessary, the apparatus of the present disclosure further includes other steps.

In the method and apparatus of the present disclosure, the processing fluid and the ink are the processing fluid and the ink of the set according to any one of claims 1 to 9.

The method of the present disclosure for producing the printed matter can be performed suitably by the apparatus of the present disclosure for producing the printed matter. The processing fluid applying step can be suitably performed by the processing fluid applying unit. The ink applying step can be suitably performed by the ink applying unit. The other steps can be suitably performed by the other units.

<Processing fluid applying step and processing fluid applying unit>

The processing fluid applying step is a step of applying the processing fluid in the present disclosure to the base.

The processing fluid applying unit is a unit configured to apply the processing fluid in the present disclosure to the base.

The base is not particularly limited and may be appropriately selected depending on the intended purpose. Examples of the base include, but are not limited to, print media described below.

The processing fluid applying unit is not particularly limited as long as it can apply the processing fluid to the base, and may be appropriately selected depending on the intended purpose.

Examples of the processing fluid applying unit include, but are not limited to, units using an inkjet method (system), a blade coating method, a gravure coating method, a gravure offset coating method, a bar coating method, a roll coating method, a knife coating method, an air knife coating method, a comma coating method, a U comma coating method, an AKKU coating method, a smoothing coating method, a microgravure coating method, a reverse roll coating method, a four- or five-roll coating method, a dip coating method, a curtain coating method, a slide coating method, and a die coating method.

Of these, an inkjet method (system) is preferable. Applying the processing fluid by an inkjet method is particularly preferable because the processing fluid can be uniformly applied over the entirety of the base and the minimum necessary amount thereof can be applied by adjusting the size of droplets.

The amount of the processing fluid applied to the base is preferably 1.5 $g/m^2$ or more but 10 $g/m^2$ or less and more preferably 4 $g/m^2$ or more but 8 $g/m^2$ or less. When the amount of the processing fluid applied to the base is 4 $g/m^2$ or more but 8 $g/m^2$ or less, it is possible to improve the effects of providing excellent scratch resistance and preventing image bleeding.

[Base (Print Medium)]

The print medium used for printing is not particularly limited. Examples of the print medium include, but are not limited to, plain paper, gloss paper, special paper, cloths, films, OHP sheets, and general-purpose print paper.

The print medium is not limited to a typically used print medium. It is also suitable to use building materials (e.g., wall paper, floor materials, and tiles), cloth (e.g., cloth for apparel such as T-shirts), textile, and leather, as the print medium. In addition, the configuration of the paths through which the print medium is transferred can be adjusted to use ceramics, glass, metal, etc.

<Ink Applying Step and Ink Applying Unit>

The ink applying step is a step of applying the ink.

The ink applying unit is a unit configured to apply the ink.

The ink applying unit is not particularly limited and may be appropriately selected depending on the intended purpose.

Examples of the ink applying unit include, but are not limited to, units using an inkjet method (system), a blade coating method, a gravure coating method, a gravure offset coating method, a bar coating method, a roll coating method,

a knife coating method, an air knife coating method, a comma coating method, a U comma coating method, an AKKU coating method, a smoothing coating method, a microgravure coating method, a reverse roll coating method, a four- or five-roll coating method, a dip coating method, a curtain coating method, a slide coating method, and a die coating method. Of these, an inkjet method (system) is preferable. Applying the processing fluid by an inkjet method is particularly preferable because the ink can be uniformly applied over the entirety of the base and the minimum necessary amount thereof can be applied by adjusting the size of droplets.

<Other Steps and Other Units>

The other steps are not particularly limited and may be appropriately selected depending on the intended purpose. Examples of the other steps include, but are not limited to, a drying step.
The other units are not particularly limited and may be appropriately selected depending on the intended purpose. Examples of the other units include, but are not limited to, a drying unit.

«Drying Step and Drying Unit»

The drying step is a step of drying the base to which the ink has been applied.
The drying unit is a unit configured to dry the base to which the ink has been applied.
The drying unit is not particularly limited and may be appropriately selected depending on the intended purpose. Examples of the drying unit include, but are not limited to, an infrared (IR) drying device, a drying oven, and a hot plate. Of these, an infrared (IR) drying device is preferable. When the drying unit is an infrared (IR) drying device, nonionic acrylic resin particles in the processing fluid can be directly heated by IR heating to cause film formation, increase adhesion strength of the base to the processing fluid layer and the ink film, and improve scratch resistance.
The drying temperature in the drying step is not particularly limited and may be appropriately selected depending on the intended purpose. It is preferably 50 degrees Celsius or higher. In terms of discharging reliability and thermal deformation of the base, the drying temperature is more preferably 50 degrees Celsius or higher but 120 degrees Celsius or lower. In terms of wettability of the ink to the base, the drying temperature is further preferably 50 degrees Celsius or higher but 90 degrees Celsius or lower. The drying temperature may be a set temperature of the drying unit used in the drying step. The drying temperature is, for example, a temperature obtained by measuring the temperature of the base in a contact or contactless manner. When the drying temperature is 50 degrees Celsius or higher, it is possible to increase fixability to the non-permeating substrate and improve the effect of preventing occurrence of bleeding. The drying temperature before or after printing is not particularly limited and may be appropriately selected depending on the intended purpose. It is preferably 100 degrees Celsius or lower in terms of discharging reliability thermal deformation of the base.
The drying time in the drying step is not particularly limited and may be appropriately selected depending on the intended purpose. It is preferably 0.01 minutes or longer but 1 minute or shorter.

[Printed Matter]

A printed matter of the present disclosure includes a print medium and an image formed on the print medium with the ink of the present disclosure.
An inkjet printing device and an inkjet printing method are used to print the image on the print medium to obtain the printed matter.

[Printing Device and Printing Method]

The ink and processing fluid in the present disclosure can be suitably applied to various printing devices employing an inkjet printing method such as printers, facsimile machines, photocopiers, multifunction peripherals (serving as a printer, a facsimile machine, and a photocopier), and 3D model manufacturing devices.
In the present disclosure, the printing device and the printing method represent a device capable of discharging ink, various processing liquids, etc. to a print medium and a method printing an image on the print medium using the device. The print medium means an article to which the ink or the various processing fluids can be attached at least temporarily.
The printing device may further optionally include a device to attach pre-coating liquid and a device relating to feeding, transferring, and ejecting the print medium and other devices referred to as a pre-processing device, a post-processing device, etc. in addition to the head portion to discharge the ink.
The printing device and the printing method may further optionally include a heater for use in the heating process and a drier for use in the drying process. For example, the heating device and the drying device heat and dry the top surface and the bottom surface of a print medium having an image. The heating device and the drying device are not

particularly limited. For example, a fan heater and an infra-red heater can be used. The print medium can be heated and dried before, during, and after printing.

In addition, the printing device and the printing method are not limited to those producing merely meaningful visible images such as texts and figures with the ink. For example, the printing device and the printing method can produce patterns like geometric design and 3D images.

In addition, the printing device includes both a serial type device in which_the liquid discharging head is caused to move and a line type device in which the liquid discharging head is not moved, unless otherwise specified.

Furthermore, in addition to the desktop type, this printing device includes a wide type capable of printing images on a large print medium such as A0, a continuous printer capable of using continuous paper wound up in a roll form as print media.

The printing device of the present disclosure is described using an example with reference to FIG. 1 and FIG. 2. FIG. 1 is a perspective view of the image printing device. FIG. 2 is a perspective view of the main tank. An image forming apparatus 400 as an example of the printing device is a serial type image forming apparatus. A mechanical unit 420 is disposed in an exterior 401 of the image forming apparatus 400. Each ink accommodating unit (ink container) 411 of each main tank 410 (410k, 410c, 410m, and 410y) for each color of black (K), cyan (C), magenta (M), and yellow (Y) is made of a packing member L such as aluminum laminate film. The ink container 411 is accommodated in a plastic housing unit 414. As a result, the main tank 410 is used as an ink cartridge of each color.

A cartridge holder 404 is disposed on the rear side of the opening when a cover 401c is opened. The cartridge holder 404 is detachably attached to the main tank 410. As a result, each ink discharging outlet 413 of the main tank 410 is communicated with a discharging head 434 for each color via a supplying tube 436 for each color so that the ink can be discharged from the discharging head 434 to a print medium.

This printing device may include not only a portion discharging ink but also a device referred to as a pre-processing device, a post-processing device, etc.

As an example of the pre-processing device and the post-processing device, as in the case of the ink such as black (K), cyan (C), magenta (M), and yellow (Y), a liquid container containing a processing fluid or a post-processing fluid and a liquid discharging head are added to discharge the processing fluid or the post-processing fluid in an inkjet printing method.

As another example of the pre-processing device and the post-processing device, it is suitable to dispose a pre-processing device and a post-processing device employing a blade coating method, a roll coating method, or a spray coating method other than the inkjet printing method.

How to use the ink is not limited to the inkjet printing method. Specific examples of such methods other than the inkjet printing method include, but are not limited to, blade coating methods, gravure coating methods, bar coating methods, roll coating methods, dip coating methods, curtain coating methods, slide coating methods, die coating methods, and spray coating methods.

FIG. 3 is schematic diagram illustrating an example of the apparatus of the present disclosure for producing the printed matter using the method of the present disclosure for producing the printed matter. As illustrated in FIG. 3, an apparatus 100 of the present disclosure for producing a printed matter includes a processing fluid applying unit 21 configured to apply a processing fluid to a base 11 and an ink applying unit 22 configured to apply an ink. The base is conveyed by a conveying unit 31.

The applications of the ink of the present disclosure are not particularly limited. For example, the ink can be used for printed matter, a paint, a coating material, and foundation.

Moreover, image forming, recording, printing, etc. in the present disclosure represent the same meaning.

A print medium, media, and a printing target represent the same meaning.

## Examples

The present disclosure will be described below by way of Examples. The present disclosure should not be construed as being limited to these Examples. Unless otherwise stated, preparation, evaluation, etc. of processing fluids and inks in the following Examples were performed at room temperature of 25 degrees Celsius and at a humidity of 60%RH.

(Preparation Example 1 of Pigment Dispersion Liquid)

<Preparation of Black Pigment Dispersion Liquid>

11.2 g of styrene, 2.8 g of acrylic acid, 12 g of lauryl methacrylate, 4 g of polyethylene glycol methacrylate, 4 g of styrene macromer, and 0.4 g of mercaptoethanol were mixed together in a flask, and the mixture was heated to 65 degrees Celsius.

Separately, 100.8 g of styrene, 25.2 g of acrylic acid, 108 g of lauryl methacrylate, 36 g of polyethylene glycol methacrylate, 60 g of hydroxylethyl methacrylate, 36 g of styrene macromer, 3.6 g of mercaptoethanol, 2.4 g of azobismethylvaleronitrile, and 18 g of methyl ethyl ketone were mixed together. The mixed solution was added dropwise to the flask for 2.5 hours.

After the addition, a mixed solution of 0.8 g of azobismethylvaleronitrile and 18 g of methyl ethyl ketone was added dropwise to the flask for 0.5 hours.

After aging at 65 degrees Celsius for 1 hour, 0.8 g of azobismethylvaleronitrile was added, followed by aging for another 1 hour.

After completion of reaction, 364 g of methyl ethyl ketone was added to the flask to obtain 800 g of polymer solution A having a solid concentration of 50% by mass.

Next, 28 g of the polymer solution A, 42 g of carbon black (obtained from Cabot Corporation, Black Pearls 1000), 13.6 g of a 1 mol/L aqueous potassium hydroxide solution, 20 g of methyl ethyl ketone, and 13.6 g of water were stirred thoroughly and kneaded in a roll mill.

The obtained paste was charged into 200 g of pure water, and the methyl ethyl ketone was removed with an evaporator. After pressure filtration with a polyvinylidene fluoride membrane filter having an average pore diameter of 5 micrometers, the amount of water was adjusted so that the solid concentration would be 20% by mass, to obtain a styrene-acrylic resin-coated black pigment dispersion liquid having a solid concentration of 20% by mass.

(Preparation Example 2 of Pigment Dispersion Liquid)

<Preparation of Cyan Pigment Dispersion Liquid>

A styrene-acrylic resin-coated cyan pigment dispersion liquid having a solid concentration of 20% by mass was obtained in the same manner as in Preparation Example 1 of Pigment Dispersion Liquid, except that the carbon black was changed to Pigment Blue 15:4 (obtained from SENSIENT, SMART Cyan 3154BA).

(Preparation Example 3 of Pigment Dispersion Liquid)

<Preparation of Magenta Pigment Dispersion Liquid>

A styrene-acrylic resin-coated magenta pigment dispersion liquid having a solid concentration of 20% by mass was obtained in the same manner as in Preparation Example 1 of Pigment Dispersion Liquid, except that the carbon black was changed to Pigment Red 122 (obtained from Sun Chemical).

(Preparation Example 4 of Pigment Dispersion Liquid)

<Preparation of Yellow Pigment Dispersion Liquid>

A styrene-acrylic resin-coated yellow pigment dispersion liquid having a solid concentration of 20% by mass was obtained in the same manner as in Preparation Example 1 of Pigment Dispersion Liquid, except that the carbon black was changed to Pigment Yellow 74 (obtained from SENSIENT, SMART Yellow 3074BA).

(Example 1)

<Production of Processing Fluid a>

Ion-exchanged water was added to materials in the following formulation for the processing fluid so that the total amount would be 100 parts by mass, followed by mixing and stirring. The mixture was filtrated with a filter having an average pore diameter of 5 micrometers (obtained from Sartorius AG, MINISART) to prepare processing fluid a.

[Formulation of Processing Fluid a]

- Polyurethane resin (1) (product name: Xw-Um12, obtained from Mitsui Chemicals, Inc.): 8.0 parts by mass
- SAG-503A (obtained from Nissin Chemical Industry Co., Ltd., silicone-based surfactant): 0.5 parts by mass
- 1,2-Propanediol (product name: Propylene glycol, obtained from ADEKA CORPORATION): 35 parts by mass
- 3-Methoxy-3-methyl-1-butanol (product name: SOLFIT, obtained from KURARAY CO., LTD.): 30 parts by mass

- Calcium acetate monohydrate (obtained from Wako Pure Chemical Corporation): 0.5 parts by mass
- Ion-exchanged water: balance (total: 100 parts by mass)

<Production of Ink A>

Ion-exchanged water was added to materials in the following formulation for the ink so that the total amount would be 100 parts by mass, followed by mixing and stirring. The mixture was filtrated with a filter having an average pore diameter of 5 micrometers (obtained from Sartorius AG, MINISART) to prepare ink a.

[Formulation of Ink]

- The above-prepared black pigment dispersion liquid: 20 parts by mass
- Acrylic resin (1) (MOWINYL 6800, obtained from Japan Coating Resin Co., Ltd., solid concentration: 45% by mass): 10.0 parts by mass
- TRITON HW1000 (obtained from The Dow Chemical Company): 1.0 part by mass
- SAG-503A (obtained from Nissin Chemical Industry Co., Ltd., silicone-based surfactant): 0.2 parts by mass
- 1,2-Propanediol (product name: Propylene glycol, obtained from ADEKA CORPORATION): 20 parts by mass
- 1,3-Butanediol (obtained from Wako Pure Chemical Corporation): 4.0 parts by mass
- 2-Ethyl-1,3-hexanediol (product name: Octanediol, obtained from Tokyo Chemical Industry Co., Ltd.): 1 part by mass
- 3-Methoxy-3-methyl-1-butanol (product name: SOLFIT, obtained from KURARAY CO., LTD.): 5 parts by mass
- 3-Methoxy-N,N-dimethylpropionamide (product name: EQUAMIDE M100, obtained from Idemitsu Kosan Co., Ltd.): 10 parts by mass
- Ion-exchanged water: balance (total: 100 parts by mass)

(Examples 2 to 10 and Comparative Examples 1 to 6)

<Production of Processing Fluids b to q and Inks B to Q>

Processing fluids b to q and inks B to Q were produced in the same manner as in Example 1, except that the formulation of the processing fluid and the formulation of the ink were changed to those described in Table 1. In Table 1 to Table 6, the content of the resin is on a solid content basis.

The "Polyurethane resin (5)" described in Table 1 to Table 6 was prepared in accordance with the following procedure.

(Preparation of Polyurethane Resin (5))

<Preparation of Polyester-based Urethane Resin Emulsion>

In a container equipped with a thermometer, a nitrogen gas introducing pipe, and a stirrer and purged with nitrogen, 200.4 g of polyester polyol (product name: POLYLITE OD-X-2251, obtained from DIC Corporation, with an average molecular weight of 2,000), 15.7 g of 2,2-dimethylolpropionic acid, 48.0 g of isophorone diisocyanate, 77.1 g of methyl ethyl ketone serving as an organic solvent were allowed to undergo reaction using 0.06 g of dibutyl tin dilaurate (DMTDL) as a catalyst. After the reaction was continued for 4 hours, 30.7 g of methyl ethyl ketone serving as a diluting solvent was supplied to the resultant, and the reaction was further continued. When the average molecular weight of the reaction product reached the range of from 20,000 through 60,000, 1.4 g of methanol was added to the resultant, and the reaction was terminated, to obtain a solution of a urethane resin in an organic solvent.

Next, 13.4 g of a 48% by mass potassium hydroxide aqueous solution was added to the solution of a urethane resin in an organic solvent, to neutralize the carboxyl group contained in the urethane resin. Next, 715.3 g of water was added to the resultant, and the resultant was sufficiently stirred, and then aged and desolventized, to obtain a polyester-based urethane resin emulsion having a solid concentration of 30% by mass.

The minimum filming temperature (MFT) of the obtained polyester-based urethane resin emulsion measured with a "filming temperature tester" (obtained from Imoto Machinery Co., Ltd.) was 74 degrees Celsius.

Details of the components in the tables are as follows.

-Resin-

- Acrylic resin (1): Mowinyl 6800 (obtained from Japan Coating Resin Co., Ltd.)
- Acrylic resin (2): Mowinyl 6969D(obtained from Japan Coating Resin Co., Ltd.)
- Acrylic resin (3): Mowinyl 6750 (obtained from Japan Coating Resin Co., Ltd.)
- Polyurethane resin (1): Xw-Um12 (obtained from Mitsui Chemicals, Inc.)
- Polyurethane resin (2): Xw-Um3A (obtained from Mitsui Chemicals, Inc.)
- Polyurethane resin (3): W6110 (obtained from Mitsui Chemicals, Inc.)
- Polyurethane resin (4): SUPERFLEX 300 (obtained from DAIICHI KOGYO Co., Ltd.)
- Polyurethane resin (5): Polyester-based urethane resin emulsion obtained in the preparation example of the polyurethane resin emulsion (minimum filming temperature (MFT); 74 degrees Celsius)
- Polyurethane resin (6): Xw-Um7F(obtained from Mitsui Chemicals, Inc.)
- Fluororesin (1): AF1600 (obtained from Chemours-Mitsui Fluoroproducts Co., Ltd.)

-Surfactants-

- Non-silicone surfactant: TRITON HW1000 (obtained from The Dow Chemical Company)
- Silicone surfactant: SAG-503A (obtained from Nissin Chemical Industry Co., Ltd.)
- Silicone surfactant: BYK-348 (BYK-Chemie Japan, K.K.)

-Organic solvents-

- 1,2-Propanediol (product name: Propyleneglycol, obtained from ADEKA CORPORATION)
- 1,3-Propanediol (product name: Propyleneglycol, obtained from ADEKA CORPORATION)
- 1,3-Butanediol (product name: 1,3-Butanediol, obtained from Daicel Corporation)
- 2-Ethyl-1,3-hexanediol (product name: Octanediol, obtained from KH Neochem Co., Ltd.)
- 3-Methyl-1,5-pentanediol (product name: MPD, obtained from KURARAY CO., LTD.)
- 3-Methoxy-1-butanol (product name: MB, obtained from Daicel Corporation)
- 3-Methoxy-3-methyl-1-butanol (product name: SOLFIT, obtained from KURARAY CO., LTD.)
- 3-Methoxy-N,N-dimethylpropionamide (product name: EQUAMIDE M100, obtained from Idemitsu Kosan Co., Ltd.)
- 3-Butoxy-N,N-dimethylpropionamide (product name: EQUAMIDE B 100, obtained from Idemitsu Kosan Co., Ltd.)

-Flocculants-

- Calcium salt: calcium acetate monohydrate
- Magnesium salt: magnesium acetate monohydrate
- Sodium salt: sodium chloride

Next, the obtained processing fluids and inks were used to form an image (an ink film) in the following manner, to obtain printed matters. The obtained printed matters were measured and evaluated for "Maximum tensile stress of ink film", "color bleed between boundaries", "cracking", and "fixability" in the following manners. Results are presented in Table 1 to Table 6.

<Image formation>

The prepared black ink, cyan ink, magenta ink, and yellow ink were charged to ink accommodating containers of a modified device of an inkjet printing device (device name: IPSIO GXe5500 modified device, obtained from Ricoh Company, Limited) in accordance with the combinations of Table 1 and Table 6. Image formation was performed under the following conditions.

<Conditions of Image Formation>

- Ink volume: 21 pL/droplet
- Resolution: 600 dpi×600 dpi
- Image formed: 100% gradation solid image
- Base: PET film (product name: TP-188, obtained from KIMOTO CO., LTD.)

<Drying Conditions>

- Pre-heat temperature: 55 degrees Celsius
- Temperature upon image formation: 55 degrees Celsius
- Drying temperature: 80 degrees Celsius

<Maximum Tensile Stress of Ink Film>

The maximum tensile stress of the ink film was measured in the following manner. First, the ink (8 g) was placed in a TEFLON (registered trademark) Petri dish 50 mm in diameter and dried in a hot air circulatory thermostatic bath of 70 degrees Celsius for two days, to obtain the ink film. The obtained ink film was cut with a cutter so as to have a size of 5 mm×50 mm. The cut film was subjected to a tensile test under the following measurement conditions, to measure the maximum tensile stress. The average thickness of the ink film was obtained by measuring the thickness at three or more points with a micrometer, followed by averaging. The average thickness of the ink film was adjusted to be from 0.3 mm through 0.8 mm.

[Measurement Conditions of Tensile Stress]

Device: AUTOGRAPH AG-10N, obtained from Shimadzu Corporation
Load cell: 50 N
Tension speed: 150 mm/min
Interchuck distance: 4 mm
Sample width: 5 mm

<Color Bleed between Boundaries>

After the processing liquid was applied to a base and then an image having adjacent different colors was formed, the color boundaries were visually observed for bleed.

[Evaluation Criteria]

A: No bleed was observed.
B: Unclear demarcation and difference in color density between the color boundaries (the range of the color density was 1.0 mm or less) were observed when the color boundaries were closely looked at.
C: Unclear demarcation and difference in color density between the color boundaries were immediately recognized.
D: The original shape was completely changed due to unclear demarcation and difference in color density between the color boundaries.

<Cracking>

After the processing liquid was applied to a base and an ink film was formed and allowed to undergo a drying process, the state of the image was visually confirmed.

[Evaluation Criteria]

A: No cracking occurred in the image.
B: Cracking occurred in the image.

<Fixability>

A solid image was obtained in the same manner as in the evaluation of the color bleed, except that a solid image instead of the text was formed with the color ink on the solid image formed with the white ink. The obtained solid image was subjected to a cross-cut test in compliant to JIS-K5600-5-6 (1.5 mm intervals, 100 squares test). Based on the following evaluation criteria, "fixability" was evaluated.

[Evaluation Criteria]

A: The number of squares that were not peeled off was 100 out of 100 squares.
B: The number of squares that were not peeled off was 80 or more but 99 or less out of 100 squares.
C: The number of squares that were not peeled off was 40 or more but 79 or less out of 100 squares.
D: The number of squares that were not peeled off was 39 or less out of 100 squares.

Table 1

| | | Ex. 1 | | Ex. 2 | | Ex. 3 | |
|---|---|---|---|---|---|---|---|
| | | Processing fluid a | Ink A | Processing fluid b | Ink B | Processing fluid c | Ink C |
| Pigment dispersion liquid | Black pigment dispersion liquid | | 20 | | | | |
| | Cyan pigment dispersion liquid | | | | 20 | | |
| | Magenta pigment dispersion liquid | | | | | | |
| | Yellow pigment dispersion liquid | | | | | | 20 |

(continued)

| | | Ex. 1 | | Ex. 2 | | Ex. 3 | |
|---|---|---|---|---|---|---|---|
| | | Processing fluid a | Ink A | Processing fluid b | Ink B | Processing fluid c | Ink C |
| Resin | Polyurethane resin (1) Xw-Um12 (Tg=-52) | 8 | | | | | |
| | Polyurethane resin (2) Xw-Um3A (Tg=-51) | | | 8 | | | |
| | Polyurethane resin (3) W6110 (Tg=-20) | | | | | 10 | |
| | Polyurethane resin (4) SUPERFLEX 300 (Tg=-42) | | | | | | |
| | Polyurethane resin (5) (Tg=74) | | | | | | 7 |
| | Polyurethane resin (6) Xw-Um7F (Tg=-5) | | | | | | |
| | Acrylic resin (1) MOWINYL 6800 (Tg=80) | | 10 | | | | |
| | Acrylic resin (2) MOWINYL 6969D (Tg=71) | | | | 8 | | |
| | Acrylic resin (3) MOWINYL 6750 (Tg=0) | | | | | | 1 |
| | Acrylic resin (4) MOWINYL 6810 (Tg=100) | | | | | | |
| | Fluororesin (1) AF1600 | | | | | | |
| Surfactant | HW 1000 (non-silicone-based surfactant) | | 1 | | 1 | | 1 |
| | SAG-503A (silicone-based surfactant) | 0.5 | 0.2 | 0.5 | 0.2 | 0.5 | 0.2 |
| | BYK348 (silicone-based surfactant) | | | | | | |

(continued)

| | | Ex. 1 | | Ex. 2 | | Ex. 3 | |
|---|---|---|---|---|---|---|---|
| | | Processing fluid a | Ink A | Processing fluid b | Ink B | Processing fluid c | Ink C |
| Organic solvent | 1,2-Propanediol | 35 | 20 | 30 | 20 | 30 | 20 |
| | 1,3-Propanediol | | | 2 | 4 | 1 | 2 |
| | 1,3-Butanediol | | 4 | 4 | | | |
| | 2-Ethyl-1,3-hexanediol | | 1 | | | 5 | |
| | 3-Methyl-1,5-pentanediol | | | | 4 | | |
| | 3 -Methoxy- 1 -butanol | | | | | | |
| | 3 -Methoxy-3 -methyl-1 -butanol | 30 | 5 | 24 | | 24 | 8 |
| | 3 -Methoxy-N,N-dimethylpropionamide (EQUAMIDE M100) | | 10 | | | | 3 |
| | 3 -Butoxy-N,N-dimethylpropionamide | | | | 7 | 3 | |
| Polyvalent metal salt (flocculant) | Calcium salt | 0.5 | | 0.5 | | | |
| | Magnesium salt | | | | | 0.5 | |
| | Sodium salt | | | | | | |
| High pure water | | Balance | Bal. | Balance | Bal. | Balance | Bal. |
| Total (% by mas) | | 100 | 100 | 100 | 100 | 100 | 100 |
| Content of resin $R^i$ in ink (% by mass) | | - | 10 | - | 8 | - | 8 |
| Content of resin $R^t$ in processing fluid (% by mass) | | 8 | - | 8 | - | 10 | - |
| $Tg^i$-$Tg^t$ (°C) | | 132 | | 121 | | 27.25 | |
| Measure -ment and evaluation results | Max. tensile stress of ink film (N/mm$^2$) | - | 12.2 | - | 11.6 | - | 5.1 |
| | Static surface tension (mN/m) | 26.2 | 21.6 | 25.8 | 21.4 | 27.1 | 21.2 |
| | Color bleed between boundaries | A | | A | | A | |
| | Cracking | A | | A | | A | |
| | Fixability | A | | A | | A | |

Table 2

| | | Ex. 4 | | Ex. 5 | | Ex. 6 | |
|---|---|---|---|---|---|---|---|
| | | Processing fluid d | Ink D | Processing fluid e | Ink E | Processing fluid f | Ink F |
| Pigment dispersion liquid | Black pigment dispersion liquid | | | | 20 | | |
| | Cyan pigment dispersion liquid | | | | | | |
| | Magenta pigment dispersion liquid | | 20 | | | | 20 |
| | Yellow pigment dispersion liquid | | | | | | |
| Resin | Polyurethane resin (1) Xw-Um12 (Tg=-52) | | | 8 | | 7 | |
| | Polyurethane resin (2) Xw-Um3A (Tg=-51) | 6 | | | | | |
| | Polyurethane resin (3) W6110 (Tg=-20) | | | | | | |
| | Polyurethane resin (4) SUPERFLEX 300 (Tg=-42) | | 2 | | | | |
| | Polyurethane resin (5) (Tg=74) | | | | | | |
| | Polyurethane resin (6) Xw-Um7F (Tg=-5) | | | | 2.5 | 3 | 10 |
| | Acrylic resin (1) MOWINYL 6800 (Tg=80) | | | | 3 | | |
| | Acrylic resin (2) MOWINYL 6969D (Tg=71) | | 7 | | | | 4.5 |
| | Acrylic resin (3) MOWINYL 6750 (Tg=0) | | | 2 | | | |
| | Acrylic resin (4) MOWINYL 6810 (Tg=100) | | | | | | |
| | Fluororesin (1) AF1600 | | | | | | |
| Surfactant | HW 1000 (non-silicone-based surfactant) | | 1 | | 1 | | 1 |
| | SAG-503A (silicone-based surfactant) | 0.5 | 0.2 | 0.5 | | 0.5 | 0.2 |
| | BYK348 (silicone-based surfactant) | | | | 0.2 | | |

(continued)

| | | Ex. 4 | | Ex. 5 | | Ex. 6 | |
|---|---|---|---|---|---|---|---|
| | | Processing fluid d | Ink D | Processing fluid e | Ink E | Processing fluid f | Ink F |
| Organic solvent | 1,2-Propanediol | 30 | 20 | 15 | 20 | 15 | 20 |
| | 1,3-Propanediol | | | 2 | | | |
| | 1,3-Butanediol | | | | 2 | | |
| | 2-Ethyl-1,3-hexanediol | | | | 3 | 5 | 3 |
| | 3-Methyl-1,5-pentanediol | 3 | 2 | | | | 1 |
| | 3 -Methoxy- 1 -butanol | 3 | 2 | 8 | | | 1 |
| | 3 -Methoxy-3 -methyl-1 -butanol | 24 | | 20 | | 30 | |
| | 3 -Methoxy-N,N-dimethylpropionamide (EQUAMIDE M100) | 1 | 4 | | 10 | 5 | |
| | 3 -Butoxy-N,N-dimethylpropionamide | | 7 | | | | 10 |
| Polyvalent metal salt (flocculant) | Calcium salt | | | | | | |
| | Magnesium salt | 0.5 | | 2.5 | | 2 | |
| | Sodium salt | | | | | | |
| High pure water | | Balance | Bal. | Balance | Bal. | Balance | Bal. |
| Total (% by mas) | | 100 | 100 | 100 | 100 | 100 | 100 |
| Content of resin $R^i$ in ink (% by mass) | | - | 9 | - | 5.5 | - | 14.5 |
| Content of resin $R^t$ in processing fluid (% by mass) | | 6 | - | 10 | - | 10 | - |
| $Tg^i$-$Tg^t$ (°C) | | 13.5 | | 63.5 | | 61.5 | |
| Measure -ment and evaluation results | Max. tensile stress of ink film (N/mm$^2$) | - | 3.2 | - | 2.2 | - | 2.1 |
| | Static surface tension (mN/m) | 24.4 | 21.7 | 26.7 | 21.5 | 26.2 | 22.8 |
| | Color bleed between boundaries | A | | A | | A | |
| | Cracking | A | | A | | A | |
| | Fixability | A | | B | | A | |

Table 3

| | | Ex. 7 | | Ex. 8 | | Ex. 9 | |
|---|---|---|---|---|---|---|---|
| | | Processing fluid g | Ink G | Processing fluid h | Ink H | Processing fluid i | Ink I |
| Pigment dispersion liquid | Black pigment dispersion liquid | | | | | | 20 |
| | Cyan pigment dispersion liquid | | 20 | | | | |
| | Magenta pigment dispersion liquid | | | | | | |
| | Yellow pigment dispersion liquid | | | | 20 | | |
| Resin | Polyurethane resin (1) Xw-Um12 (Tg=-52) | | | | | | |
| | Polyurethane resin (2) Xw-Um3A (Tg=-51) | 6 | | | | | |
| | Polyurethane resin (3) W6110 (Tg=-20) | | | 5 | | 3 | |
| | Polyurethane resin (4) SUPERFLEX 300 (Tg=-42) | | | | 4 | | 4 |
| | Polyurethane resin (5) (Tg=74) | | | | 2 | | |
| | Polyurethane resin (6) Xw-Um7F (Tg=-5) | 2 | | 5 | | | 7 |
| | Acrylic resin (1) MOWINYL 6800 (Tg=80) | | | | | | |
| | Acrylic resin (2) MOWINYL 6969D (Tg=71) | | | | | | |
| | Acrylic resin (3) MOWINYL 6750 (Tg=0) | | 4 | | | 5 | |
| | Acrylic resin (4) MOWINYL 6810 (Tg=100) | | | | | | |
| | Fluororesin (1) AF1600 | | | | | | |
| Surfactant | HW 1000 (non-silicone-based surfactant) | | 1 | | 1 | | 1 |
| | SAG-503A (silicone-based surfactant) | 0.25 | 0.2 | 0.4 | 0.2 | 0.5 | 0.2 |
| | BYK348 (silicone-based surfactant) | 0.25 | | | | | |

(continued)

| | | Ex. 7 | | Ex. 8 | | Ex. 9 | |
|---|---|---|---|---|---|---|---|
| | | Processing fluid g | Ink G | Processing fluid h | Ink H | Processing fluid i | Ink I |
| Organic solvent | 1,2-Propanediol | 20 | 20 | 41 | 20 | 30 | 20 |
| | 1,3-Propanediol | | | | | 4 | |
| | 1,3-Butanediol | | | | 2 | | |
| | 2-Ethyl-1,3-hexanediol | | 3 | | | | |
| | 3-Methyl-1,5-pentanediol | | | | | 1 | 4 |
| | 3 -Methoxy- 1 -butanol | | | 2 | | | 4 |
| | 3 -Methoxy-3 -methyl-1 -butanol | 30 | | 30 | 5 | 36 | |
| | 3 -Methoxy-N,N-dimethylpropionamide (EQUAMIDE M100) | 3 | 5 | | | | |
| | 3 -Butoxy-N,N-dimethylpropionamide | 5 | 3 | | | | |
| Polyvalent metal salt (flocculant) | Calcium salt | | | | | | |
| | Magnesium salt | 0.5 | | 0.5 | | 0.5 | |
| | Sodium salt | | | | | | |
| High pure water | | Balance | Bal. | Balance | Bal. | Balance | Bal. |
| Total (% by mas) | | 100 | 100 | 100 | 100 | 100 | 100 |
| Content of resin $R^i$ in ink (% by mass) | | - | 4 | - | 6 | - | 11 |
| Content of resin $R^t$ in processing fluid (% by mass) | | 8 | - | 10 | - | 8 | - |
| $Tg^i$-$Tg^t$ (°C) | | 39.5 | | 65.2 | | 1 | |
| Measure -ment and evaluation results | Max. tensile stress of ink film (N/mm$^2$) | - | 2.8 | - | 2.7 | - | 4.5 |
| | Static surface tension (mN/m) | 25.5 | 20.2 | 26.6 | 21.4 | 24.2 | 21.8 |
| | Color bleed between boundaries | B | | A | | B | |
| | Cracking | A | | A | | A | |
| | Fixability | B | | B | | A | |

Table 4

| | | Ex. 10 | | Ex. 11 | | Ex. 12 | |
|---|---|---|---|---|---|---|---|
| | | Processing fluid j | Ink J | Processing fluid k | Ink K | Processing fluid l | Ink L |
| Pigment dispersion liquid | Black pigment dispersion liquid | | | | | | |
| | Cyan pigment dispersion liquid | | 20 | | 20 | | 20 |
| | Magenta pigment dispersion liquid | | | | | | |
| | Yellow pigment dispersion liquid | | | | | | |
| Resin | Polyurethane resin (1) Xw-Um12 (Tg=-52) | 4 | | | | | |
| | Polyurethane resin (2) Xw-Um3A (Tg=-51) | 4 | | | | 4 | |
| | Polyurethane resin (3) W6110 (Tg=-20) | | | 4 | | | |
| | Polyurethane resin (4) SUPERFLEX 300 (Tg=-42) | | | | | | |
| | Polyurethane resin (5) (Tg=74) | | 8 | | | | 5 |
| | Polyurethane resin (6) Xw-Um7F (Tg=-5) | | | | | | |
| | Acrylic resin (1) MOWINYL 6800 (Tg=80) | | | | | | |
| | Acrylic resin (2) MOWINYL 6969D (Tg=71) | | | | | | 2 |
| | Acrylic resin (3) MOWINYL 6750 (Tg=0) | | | | | | |
| | Acrylic resin (4) MOWINYL 6810 (Tg=100) | | 4 | | 8 | 2 | |
| | Fluororesin (1) AF1600 | | | | | | |
| Surfactant | HW 1000 (non-silicone-based surfactant) | | 1 | | 1 | | 1 |
| | SAG-503A (silicone-based surfactant) | 0.5 | 0.2 | 0.5 | 0.2 | 1 | 0.2 |
| | BYK348 (silicone-based surfactant) | | | | | | |

(continued)

| | | Ex. 10 | | Ex. 11 | | Ex. 12 | |
|---|---|---|---|---|---|---|---|
| | | Processing fluid j | Ink J | Processing fluid k | Ink K | Processing fluid l | Ink L |
| Organic solvent | 1,2-Propanediol | 30 | 20 | 30 | 20 | 20 | 20 |
| | 1,3-Propanediol | 2 | | 2 | | 2 | |
| | 1,3-Butanediol | | | | | | |
| | 2-Ethyl-1,3-hexanediol | | 2 | | 2 | | 2 |
| | 3-Methyl-1,5-pentanediol | | | | | | |
| | 3 -Methoxy- 1 -butanol | 2 | | 2 | | 2 | |
| | 3 -Methoxy-3 -methyl-1 -butanol | 34 | 6 | 34 | 6 | 34 | 6 |
| | 3 -Methoxy-N,N-dimethylpropionamide (EQUAMIDE M100) | 2 | | 2 | | 2 | |
| | 3 -Butoxy-N,N-dimethylpropionamide | | | | | | |
| Polyvalent metal salt (flocculant) | Calcium salt | | | | | | |
| | Magnesium salt | 0.5 | | 0.5 | | 0.5 | |
| | Sodium salt | | | | | | |
| High pure water | | Balance | Bal. | Balance | Bal. | Balance | Bal. |
| Total (% by mas) | | 100 | 100 | 100 | 100 | 100 | 100 |
| Content of resin $R^i$ in ink (% by mass) | | - | 12 | - | 12 | - | 12 |
| Content of resin $R^t$ in processing fluid (% by mass) | | 8 | - | 8 | - | 8 | - |
| $Tg^i$-$Tg^t$ (°C) | | 676.8 | | 120 | | 125 | |
| Measure -ment and evaluation results | Max. tensile stress of ink film ($N/mm^2$) | - | 3.1 | - | 3.1 | - | 3.1 |
| | Static surface tension (mN/m) | 26.2 | 21.5 | 26.2 | 21.5 | 18.8 | 21.5 |
| | Color bleed between boundaries | A | | B | | B | |
| | Cracking | A | | A | | A | |
| | Fixability | A | | B | | B | |

Table 5

| | | Comp. Ex. 1 | | Comp. Ex. 2 | | Comp. Ex. 3 | |
|---|---|---|---|---|---|---|---|
| | | Processing fluid m | Ink M | Processing fluid n | Ink N | Processing fluid o | Ink O |
| Pigment dispersion liquid | Black pigment dispersion liquid | | 20 | | | | |
| | Cyan pigment dispersion liquid | | | | 20 | | |
| | Magenta pigment dispersion liquid | | | | | | 20 |
| | Yellow pigment dispersion liquid | | | | | | |
| Resin | Polyurethane resin (1) Xw-Um12 (Tg=-52) | 6 | | 7 | | | |
| | Polyurethane resin (2) Xw-Um3A (Tg=-51) | 2 | | | | 7 | |
| | Polyurethane resin (3) W6110 (Tg=-20) | | | 1 | 8 | | |
| | Polyurethane resin (4) SUPERFLEX 300 (Tg=-42) | | | | | | |
| | Polyurethane resin (5) (Tg=74) | | | | | | |
| | Polyurethane resin (6) Xw-Um7F (Tg=-5) | | | | | | |
| | Acrylic resin (1) MOWINYL 6800 (Tg=80) | | 2 | | | | |
| | Acrylic resin (2) MOWINYL 6969D (Tg=71) | | | | | | |
| | Acrylic resin (3) MOWINYL 6750 (Tg=0) | | | | | 2 | 0.5 |
| | Acrylic resin (4) MOWINYL 6810 (Tg=100) | | | | | | |
| | Fluororesin (1) AF1600 | | | | | | |
| Surfactant | HW 1000 (non-silicone-based surfactant) | | 1 | | 1 | 0.1 | 1 |
| | SAG-503A (silicone-based surfactant) | 0.5 | 0.2 | 0.5 | 0.2 | 0.4 | 0.2 |
| | BYK348 (silicone-based surfactant) | | | | | | |

(continued)

| | | Comp. Ex. 1 | | Comp. Ex. 2 | | Comp. Ex. 3 | |
|---|---|---|---|---|---|---|---|
| | | Processing fluid m | Ink M | Processing fluid n | Ink N | Processing fluid o | Ink O |
| Organic solvent | 1,2-Propanediol | 30 | | 35 | 20 | 28 | 10 |
| | 1,3-Propanediol | | 10 | | | 2 | |
| | 1,3-Butanediol | | 8 | 3 | | | 12 |
| | 2-Ethyl-1,3-hexanediol | 2 | | | | 6 | |
| | 3-Methyl-1,5-pentanediol | 3 | | 5 | | | |
| | 3 -Methoxy- 1 -butanol | | | | | | 2 |
| | 3 -Methoxy-3 -methyl-1 -butanol | 25 | | 24 | | 30 | |
| | 3 -Methoxy-N,N-dimethylpropionamide (EQUAMIDE M100) | | 5 | | | | |
| | 3 -Butoxy-N,N-dimethylpropionamide | | | 3 | 8 | | |
| Polyvalent metal salt (flocculant) | Calcium salt | | | | | | |
| | Magnesium salt | | | 5.1 | | 0.5 | |
| | Sodium salt | 0.5 | | | | | |
| High pure water | | Balance | Bal. | Balance | Bal. | Balance | Bal. |
| Total (% by mas) | | 100 | 100 | 100 | 100 | 100 | 100 |
| Content of resin $R^i$ in ink (% by mass) | | - | 2 | - | 8 | - | 0.5 |
| Content of resin $R^t$ in processing fluid (% by mass) | | 8 | - | 8 | - | 9 | - |
| $Tg^i$-$Tg^t$ (°C) | | 131.75 | | -28 | | 39.7 | |
| Measure -ment and evaluation results | Max. tensile stress of ink film ($N/mm^2$) | - | 1.9 | - | 1.4 | - | 0.8 |
| | Static surface tension (mN/m) | 26.0 | 18.8 | 25.6 | 19.6 | 25.8 | 17.2 |
| | Color bleed between boundaries | C | | B | | A | |
| | Cracking | A | | B | | B | |
| | Fixability | D | | C | | D | |

Table 6

| | | Comp. Ex. 4 | | Comp. Ex. 5 | | Comp. Ex. 6 | |
|---|---|---|---|---|---|---|---|
| | | Processing fluid o | Ink O | Processing fluid p | Ink P | Processing fluid q | Ink Q |
| Pigment dispersion liquid | Black pigment dispersion liquid | | | | 20 | | |
| | Cyan pigment dispersion liquid | | | | | | 20 |
| | Magenta pigment dispersion liquid | | | | | | |
| | Yellow pigment dispersion liquid | | 20 | | | | |
| Resin | Polyurethane resin (1) Xw-Um12 (Tg=-52) | | | | | 6 | |
| | Polyurethane resin (2) Xw-Um3A (Tg=-51) | 7 | | | | | |
| | Polyurethane resin (3) W6110 (Tg=-20) | | 2 | | | | |
| | Polyurethane resin (4) SUPERFLEX 300 (Tg=-42) | | | 8 | | | |
| | Polyurethane resin (5) (Tg=74) | | | | 3 | | 3 |
| | Polyurethane resin (6) Xw-Um7F (Tg=-5) | | | | | | |
| | Acrylic resin (1) MOWINYL 6800 (Tg=80) | | | | | | 3 |
| | Acrylic resin (2) MOWINYL 6969D (Tg=71) | | 5 | | | | |
| | Acrylic resin (3) MOWINYL 6750 (Tg=0) | 3 | | | | 4 | |
| | Acrylic resin (4) MOWINYL 6810 (Tg=100) | | | | | | |
| | Fluororesin (1) AF1600 | | | | | | |
| Surfactant | HW 1000 (non-silicone-based surfactant) | 0.5 | 2 | | 2 | 0.5 | 1 |
| | SAG-503A (silicone-based surfactant) | | | 0.5 | | | 0.2 |
| | BYK348 (silicone-based surfactant) | | | | | | |

(continued)

| | | Comp. Ex. 4 | | Comp. Ex. 5 | | Comp. Ex. 6 | |
|---|---|---|---|---|---|---|---|
| | | Processing fluid o | Ink O | Processing fluid p | Ink P | Processing fluid q | Ink Q |
| Organic solvent | 1,2-Propanediol | 41 | 20 | 20 | 20 | 15 | 20 |
| | 1,3-Propanediol | 2 | | | | 2 | |
| | 1,3-Butanediol | | | | | | 1 |
| | 2-Ethyl-1,3-hexanediol | | | | | | |
| | 3-Methyl-1,5-pentanediol | | | | | | |
| | 3 -Methoxy- 1 -butanol | 1 | 8 | | 8 | 10 | 5 |
| | 3 -Methoxy-3 -methyl-1 -butanol | 30 | | 10 | | 10 | |
| | 3 -Methoxy-N,N-dimethylpropionamide (EQUAMIDE M100) | | | | | | |
| | 3 -Butoxy-N,N-dimethylpropionamide | | | | | | |
| Polyvalent metal salt (flocculant) | Calcium salt | | | | | | |
| | Magnesium salt | 0.5 | | 0.5 | | 0.5 | |
| | Sodium salt | | | | | | |
| High pure water | | Balance | Bal. | Balance | Bal. | Balance | Bal. |
| Total (% by mas) | | 100 | 100 | 100 | 100 | 100 | 100 |
| Content of resin $R^i$ in ink (% by mass) | | - | 7 | - | 3 | - | 6 |
| Content of resin $R^t$ in processing fluid (% by mass) | | 10 | - | 8 | - | 10 | - |
| $Tg^i$-$Tg^t$ (°C) | | 72.1 | | 116 | | 108.2 | |
| Measure -ment and evaluation results | Max. tensile stress of ink film (N/mm$^2$) | - | 1.8 | - | 1.8 | - | 2.4 |
| | Static surface tension (mN/m) | 23.2 | 19.3 | 19.8 | 19.3 | 27.1 | 22.2 |
| | Color bleed between boundaries | D | | B | | D | |
| | Cracking | B | | A | | A | |
| | Fixability | C | | D | | A | |

Aspects and embodiments of the present disclosure are as follows, for example.

<1> A set of a processing fluid and an ink, the set including:

the ink containing a coloring material, an organic solvent, and a resin $R^i$; and
the processing fluid containing a polyvalent metal salt, a resin $R^t$, and a silicone-based surfactant,
wherein a maximum tensile stress of an ink film obtained by drying the ink is 2 N/mm$^2$ or greater.

<2> The set according to <1> above, wherein the polyvalent metal salt is at least one salt selected from the group consisting of calcium salts and magnesium salts.

<3> The set according to <1> or <2> above, wherein a proportion of the polyvalent metal salt in the processing fluid is 2% by mass or less.
<4> The set according to any one of <1> to <3> above, wherein the resin $R^i$ contains at least one resin selected from the group consisting of urethane resins and acrylic resins.
<5> The set according to any one of <1> to <4> above, wherein a glass transition temperature ($Tg^i$) of the resin $R^i$ is lower than 100 degrees Celsius.
<6> The set according to any one of <1> to <5> above, wherein a proportion of the resin $R^i$ in the ink is 5% by mass or more but less than 15% by mass.
<7> The set according to any one of <1> to <6> above, wherein a glass transition temperature ($Tg^t$) of the resin $R^t$ and a glass transition temperature ($Tg^i$) of the resin $R^i$ satisfy $Tg^t<Tg^i$.
<8> The set according to any one of <1> to <7> above, wherein a static surface tension $\gamma^t$ of the processing fluid and a static surface tension $\gamma^i$ of the ink satisfy $\gamma^t>\gamma^i$.
<9> The set according to any one of <1> to <8> above, wherein the set is for use in a non-permeating substrate.
<10> A method for producing a printed matter, the method including:

applying a processing fluid to a base; and
applying an ink,
wherein the processing fluid and the ink are the processing fluid and the ink of the set according to any one of <1> to <9> above.

<11> An apparatus for producing a printed matter, the apparatus including:

the processing fluid and the ink of the set according to any one of <1> to <9> above;
a processing fluid applying unit configured to apply the processing fluid to a base; and
an ink applying unit configured to apply the ink.

The set according to any one of <1> to <9> above, the method according to <10> above, and the apparatus according to <11> above can solve existing problems in the art and can achieve the object of the present disclosure.

## Claims

1. A set of a processing fluid and an ink, the set comprising:

   the ink containing a coloring material, an organic solvent, and a resin $R^i$; and
   the processing fluid containing a polyvalent metal salt, a resin $R^t$, and a silicone-based surfactant,
   wherein a maximum tensile stress of an ink film obtained by drying the ink is 2 $N/mm^2$ or greater.

2. The set according to claim 1, wherein the polyvalent metal salt is at least one salt selected from the group consisting of calcium salts and magnesium salts.

3. The set according to claim 1 or 2, wherein a proportion of the polyvalent metal salt in the processing fluid is 2% by mass or less.

4. The set according to any one of claims 1 to 3, wherein the resin $R^i$ contains at least one resin selected from the group consisting of urethane resins and acrylic resins.

5. The set according to any one of claims 1 to 4, wherein a glass transition temperature ($Tg^i$) of the resin $R^i$ is lower than 100 degrees Celsius.

6. The set according to any one of claims 1 to 5, wherein a proportion of the resin $R^i$ in the ink is 5% by mass or more but less than 15% by mass.

7. The set according to any one of claims 1 to 6, wherein a glass transition temperature ($Tg^t$) of the resin $R^t$ and a glass transition temperature ($Tg^i$) of the resin $R^i$ satisfy $Tg^t<Tg^i$.

8. The set according to any one of claims 1 to 7, wherein a static surface tension $\gamma^t$ of the processing fluid and a static surface tension $\gamma^i$ of the ink satisfy $\gamma^t>\gamma^i$.

**9.** The set according to any one of claim 1 to 8, wherein the set is for use in a non-permeating substrate.

**10.** A method for producing a printed matter, the method comprising:

applying a processing fluid to a base; and
applying an ink,
wherein the processing fluid and the ink are the processing fluid and the ink of the set according to any one of claims 1 to 9.

**11.** An apparatus (100) for producing a printed matter, the apparatus (100) comprising:

the processing fluid and the ink of the set according to any one of claims 1 to 9;
a processing fluid applying unit (21) configured to apply the processing fluid to a base (11); and
an ink applying unit (22) configured to apply the ink.

FIG. 1

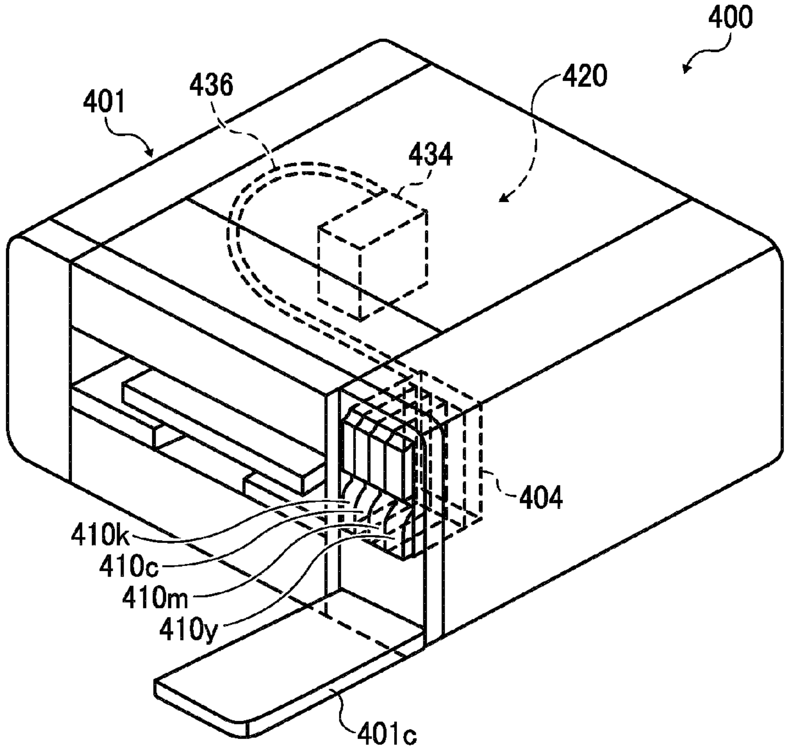
400
401
436
420
434
404
410k
410c
410m
410y
401c

FIG. 2

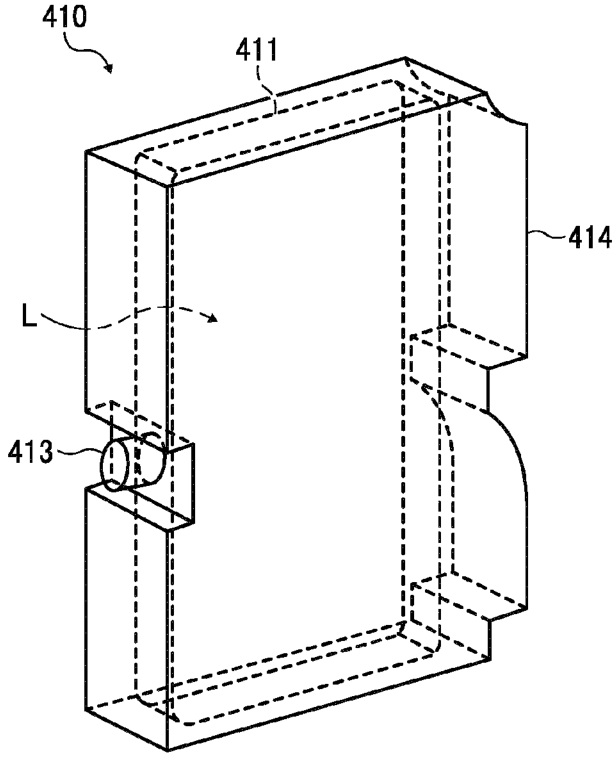
410
411
414
L
413

FIG. 3

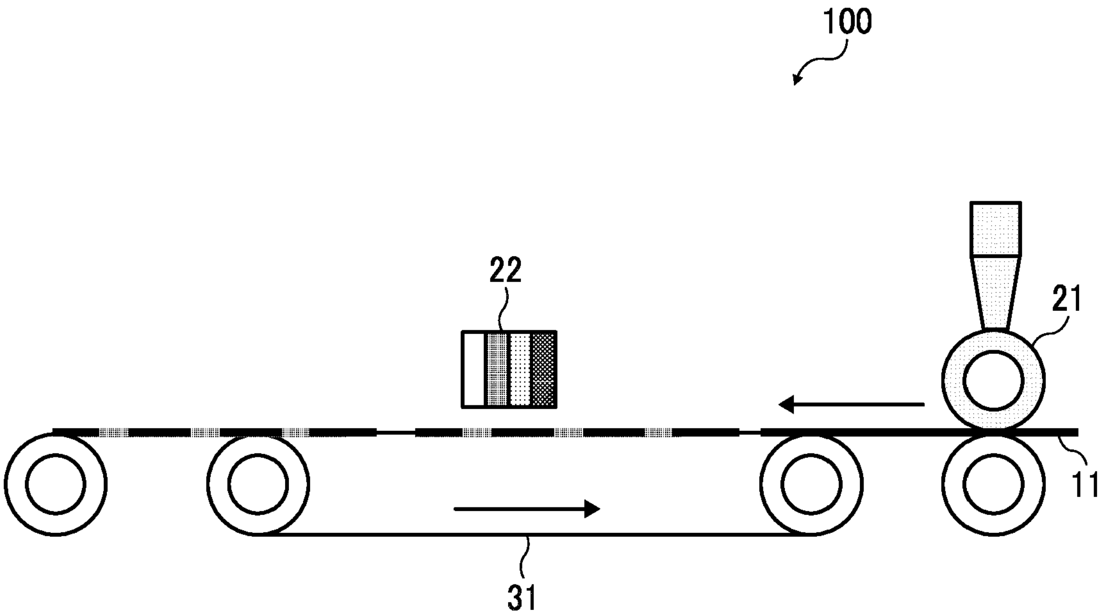

Europäisches Patentamt
European Patent Office
Office européen des brevets

# EUROPEAN SEARCH REPORT

Application Number
EP 22 17 5000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/355868 A1 (SAIGA TAKUYA [JP] ET AL) 14 December 2017 (2017-12-14) * claims; examples * ----- | 1-11 | INV. C09D11/102 C09D11/107 C09D11/322 C09D11/38 C09D11/40 C09D11/54 |
| X | EP 3 789 465 A1 (KONICA MINOLTA INC [JP]) 10 March 2021 (2021-03-10) * claims; examples * ----- | 1-11 | |
| X | US 2017/292035 A1 (SAITO TORU [JP] ET AL) 12 October 2017 (2017-10-12) * claims; examples * ----- | 1-11 | |
| X | EP 3 653 679 A1 (TOYO INK SC HOLDINGS CO LTD [JP]; TOYO INK CO LTD [JP]) 20 May 2020 (2020-05-20) * claims; examples * ----- | 1-11 | |
| X | EP 3 403 840 A1 (TOYO INK SC HOLDINGS CO LTD [JP]; TOYO INK CO LTD [JP]) 21 November 2018 (2018-11-21) * claims; examples * ----- | 1-11 | TECHNICAL FIELDS SEARCHED (IPC) |
| X | US 2012/314000 A1 (SARKISIAN GEORGE [US] ET AL) 13 December 2012 (2012-12-13) * paragraph [0043] - paragraph [0052]; claims; examples * ----- | 1-11 | C09D |

The present search report has been drawn up for all claims

1

| Place of search | Date of completion of the search | Examiner |
|---|---|---|
| Munich | 20 October 2022 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 17 5000

This annex lists the patent family members relating to the patent documents cited in the above-mentioned European search report. The members are as contained in the European Patent Office EDP file on
The European Patent Office is in no way liable for these particulars which are merely given for the purpose of information.

20-10-2022

| Patent document cited in search report | Publication date | Patent family member(s) | Publication date |
|---|---|---|---|
| US 2017355868 A1 | 14-12-2017 | NONE | |
| EP 3789465 A1 | 10-03-2021 | EP 3789465 A1 | 10-03-2021 |
| | | JP 2021042264 A | 18-03-2021 |
| | | US 2021071026 A1 | 11-03-2021 |
| US 2017292035 A1 | 12-10-2017 | JP 2017186455 A | 12-10-2017 |
| | | US 2017292035 A1 | 12-10-2017 |
| EP 3653679 A1 | 20-05-2020 | EP 3653679 A1 | 20-05-2020 |
| | | JP 6425051 B1 | 21-11-2018 |
| | | JP 2019019187 A | 07-02-2019 |
| | | US 2020172754 A1 | 04-06-2020 |
| | | WO 2019013338 A1 | 17-01-2019 |
| EP 3403840 A1 | 21-11-2018 | CN 108472974 A | 31-08-2018 |
| | | EP 3403840 A1 | 21-11-2018 |
| | | EP 3517584 A1 | 31-07-2019 |
| | | JP 6859524 B2 | 14-04-2021 |
| | | JP 7088269 B2 | 21-06-2022 |
| | | JP 2017128117 A | 27-07-2017 |
| | | JP 2021054084 A | 08-04-2021 |
| | | US 2019016911 A1 | 17-01-2019 |
| | | WO 2017122818 A1 | 20-07-2017 |
| US 2012314000 A1 | 13-12-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019104136 A